# DEMANDE DE BREVET EUROPEEN

(11) **EP 4 447 072 A1**
(43) Date de publication de la demande: **16.10.2024**
(21) Numéro de dépôt: 24169386.0
(22) Date de dépôt: 10.04.2024
(51) Int. Cl.: H01B 3/44, C08L 27/06, C08K 5/11, C08K 5/12

(54) **CÂBLE ÉLECTRIQUE COMPRENANT UNE COUCHE FLEXIBLE DE POLYCHLORURE DE VINYLE RÉALISÉ À PARTIR D'UN POLYCHLORURE DE VINYLE RIGIDE**

(30) Priorité: 11.04.2023 FR 2303586
(71) Demandeur: Nexans, 92400 Courbevoie (FR)
(72) Inventeur: DESMARS, Loriane, 42320 FARNAY (FR); BAYON, Lorrene, 69740 GENAS (FR); LARCHE, Jean-François, 69250 FLEURIEU SUR SAONE (FR); BILLEMAZ, Didier, 01120 NIEVROZ (FR)
(74) Mandataire: Ipsilon

(57) **Abrégé**

La présente invention concerne un câble électrique comprenant au moins une couche à base de polychlorure de vinyle (PVC) entourant au moins un élément conducteur allongé, où ladite couche comprend un PVC plastifié obtenu par mélange d'un plastifiant avec un PVC rigide soumis à un traitement thermique (par exemple à une mise en forme à chaud de type extrusion) préalablement au mélange avec le plastifiant, typiquement un PVC rigide recyclé.

## Description

La présente invention concerne le domaine des fils ou câbles électriques comprenant une couche flexible à base de polychlorure de vinyle (PVC) qui est sont obtenue au moins pour partie par recyclage de PVC.

L'invention s'applique en particulier aux fils et câbles électriques destinés au transport d'énergie, notamment aux fils et câbles d'énergie à basse tension (notamment une tension inférieure à 6 kV) ou à moyenne tension (notamment une tension allant de 6 à 45-60 kV) qu'ils soient en courant continu ou alternatif, et particulièrement aux câbles d'énergie à basse tension.

L'emploi de PVC recyclé pour la fabrication de câbles est connue, notamment pour la constitution de couches flexibles, par exemple de couches isolantes ou de gaines de protection. Dans un câble, les couches de PVC de ce type présentent un caractère flexible et, par conséquent, les PVC recyclés employés pour la constitution de câbles sont à l'heure actuelle des PVC flexibles.

Il existe par ailleurs d'autres sources de PVC recyclé, incluant des PVC rigides comme ceux employés par exemple en plomberie, notamment pour la fabrication de tuyaux rigides, ou bien en menuiserie, notamment pour la fabrication d'encadrement de portes ou de fenêtres. Ces PVC rigides peuvent également être recyclés, mais, dans ce cas, il sont généralement réemployés pour des applications où leur rigidité est requise. A l'heure actuelle, ils n'ont pas été envisagés pour la réalisation de câbles où des propriétés de flexibilité sont recherchées, et les PVC rigides s'avèrent d'ailleurs inadaptés, en tant que tels, pour une application dans des câbles.

Un but de la présente invention est d'élargir le spectre des PVC recyclés utilisables pour la constitution de couches de câbles électriques, notamment pour la constitution de couches isolantes ou de gaines de protection.

A cet effet, la présente invention propose une nouvelle voie de valorisation des PVC rigides, qui permet leur emploi pour la constitution de couches flexibles dans des câbles électrique.

Plus précisément, selon un premier aspect, la présente invention a pour objet un câble électrique comprenant au moins une couche à base de PVC entourant au moins un élément conducteur allongé, où ladite couche comprend un PVC plastifié obtenu par mélange d'un plastifiant avec un PVC rigide ayant été soumis à un traitement thermique préalablement au mélange avec le plastifiant. Selon un autre aspect, la présente invention a pour objet un procédé de préparation d'un câble électrique comprenant au moins une couche à base de PVC entourant au moins un élément conducteur allongé, ledit procédé comprenant au moins une étape où on applique autour dudit conducteur allongé une composition polymère comprenant un mélange d'un plastifiant avec un PVC rigide ayant été soumis à un traitement thermique préalablement au mélange avec le plastifiant.

A des fins de concision, le mélange de PVC rigide et de plastifiant employé selon l'invention sera désigné ci-après par « PVC plastifié selon l'invention ».

Par « PVC rigide », on entend au sens de la présente invention une composition plastique qui :
(i) comprend du polychlorure de vinyle PVC (voire est uniquement constituée de PVC) ; et
(ii) a une température de transition vitreuse Tg supérieure à 40°C.

Un PVC rigide utilisé selon l'invention a de préférence une température de transition vitreuse Tg d'au moins 50°C, avantageusement d'au moins 70°C, par exemple entre 75 et 85°C. La valeur de la transition vitreuse à laquelle il est fait référence ici correspond à celle mesurée par calorimétrie Différentielle à Balayage (10 °C/min, N₂, onset).

Par ailleurs, le PVC rigide employé selon la présente invention est spécifiquement un PVC ayant subi un traitement thermique, ce traitement thermique ayant induit au sein du PVC une modification de sa morphologie et/ou de sa cristallinité due à une fusion du PVC. Le PVC rigide selon l'invention est en particulier à distinguer d'un PVC dit « vierge » tel qu'issu d'un réacteur de synthèse de PVC et il ne présente pas la morphologie d'un tel PVC n'ayant jamais subi de traitement thermique.

Le PVC rigide utilisé dans la cadre de la présente invention peut typiquement être un PVC ayant subi au moins une étape de traitement thermomécanique avant le mélange avec le plastifiant, notamment une étape de mise en forme à chaud, comme par exemple une étape d'extrusion.

Le PVC rigide employé selon la présente invention peut avantageusement être un PVC issu d'un recyclage (notamment d'un recyclage de tuyaux de PVC ou d'éléments architecturaux en PVC, notamment de type menuiseries comme par exemple issu d'un recyclage d'encadrement de fenêtres ou de portes). Il peut typiquement s'agir d'un PVC recyclé au sens de la norme ISO 14021 ou EN 45557. La présente invention est tout particulièrement intéressante en employant un PVC rigide recyclé, et ce non seulement d'un point de vue économique mais également et surtout d'un point de vue environnemental. En particulier, lorsque le PVC rigide est un matériau recyclé, la préparation du câble selon l'invention permet une valorisation de déchets dont le stockage ou la destruction n'a plus à être prise en charge.

Selon l'invention, le PVC rigide est employé en mélange avec un plastifiant de façon à fournir une composition de PVC, dite « PVC plastifié » qui s'avère particulièrement adaptée pour la fabrication d'une couche d'un câble électrique.

Le mélange du plastifiant avec le PVC rigide spécifique employé selon l'invention s'avère en pratique plus aisé que ce que laissait supposer l'enseignement des documents de l'état de la technique, qui indiquent au contraire qu'une incorporation d'un plastifiant dans un PVC rigide est en général un processus compliqué, voire impossible (à ce sujet, on pourra par exemple se reporter à WO 9522574 qui stipule qu'un PVC rigide n'est pas capable d'absorber un plastifiant). Il est à noter que la plastification du PVC opérée selon l'invention est effectuée au départ d'un PVC bien particulier, à savoir un PVC rigide qui a été préalablement soumis à un traitement thermique, ce qui modifie sa morphologie et sa cristallinité par rapport à un PVC vierge.

Il s'avère contre toute attente que le mélange d'un plastifiant et d'un PVC rigide particulier tel qu'employé selon l'invention peut en fait être effectué de façon efficace et qu'il conduit à des compositions de PVC plastifiées de façon homogène.

Plus important encore, les travaux effectués par les inventeurs dans le cadre de la présente invention ont maintenant permis d'établir que le PVC plastifié tel qu'on l'obtient selon l'invention présente des propriétés adéquates pour une application dans un câble, comme illustré dans les exemples ci-après.

Un PVC plastifié selon l'invention peut notamment être employé pour réaliser une couche électriquement isolante (diélectrique) autour d'au moins un élément conducteur allongé et/ou pour réaliser une gaine de protection entourant un ensemble comprenant (i) au moins un élément conducteur allongé et (ii) une couche isolante (à base ou non d'un PVC plastifié selon l'invention) entourant ledit élément conducteur allongé.

Selon un mode de réalisation préférentiel, un PVC plastifié selon l'invention est employé pour réaliser une gaine de protection telle que définie ci-dessus.

Selon un autre mode de réalisation possible, un PVC plastifié selon l'invention peut être employée pour la fabrication d'une couche de bourrage autour d'éléments conducteurs eux-mêmes recouverts par une couche isolante (à base ou non d'une composition selon l'invention) et entourés par une gaine de protection (à base ou non d'une composition selon l'invention). Le cas échéant, la couche de bourrage est localisée dans l'espace interne de la gaine de protection, autour des éléments conducteurs isolés (en d'autres termes entre la couche isolante et la gaine de protection).

Lorsque le PVC plastifié de l'invention est employé pour réaliser une gaine de protection, cette gaine peut être la gaine externe du câble, à savoir de préférence la couche la plus externe dudit câble. Le câble ne comprend pas alors d'autre(s) couche(s) entourant ladite gaine.

Alternativement, une gaine de protection à base d'un PVC plastifié selon l'invention peut être une gaine de protection qui ne constitue pas la couche la plus externe du câble. Par exemple, il peut s'agir d'une gaine de protection interne, ou bien d'une couche externe à base de PVC plastifié mais recouverte par une surcouche (« skin »), par exemple une surcouche colorée. Les couches de PVC préparées selon l'invention sont généralement non réticulées, ce qui simplifie leur mise en oeuvre (dite «*processability*» en anglais) et autorise leur recyclage («*reprocessability*» en anglais).

Un PVC plastifié selon l'invention est notamment bien adapté pour la constitution de couches dans des câbles d'énergie à basse tension, et tout particulièrement pour des câbles destinés à être employés dans le domaine du bâtiment, par exemple dans les hôpitaux, les gares, les maisons individuelles ou bien encore dans les centres de données informatiques (« *data centers* ») ou les stations de recharge électriques.

Différentes caractéristiques de l'invention et des modes de réalisation intéressants de celle-ci sont décrits plus en détails ci-après.

### Le polychlorure de vinyle rigide

Le PVC rigide employé pour réaliser un PVC plastifié selon l'invention peut varier en une assez large mesure, sous réserve qu'il présente une Tg telle que définie plus haut dans la présente description et qu'il ait été soumis à une étape préalable de traitement thermique modifiant sa morphologie et sa cristallinité par rapport à celles obtenues à l'issu de sa synthèse.

Le PVC rigide employé pour réaliser un PVC plastifié selon l'invention est, en général, sous la forme d'une composition comprenant du PVC à titre d'unique polymère, avec éventuellement des charges, des additifs et d'éventuelles impuretés. A noter que le PVC plastifié employé selon l'invention peut comprendre, en plus du plastifiant et du PVC rigide, d'autres constituants décrits plus en détails ci-dessous, qui ne font pas partie de la composition du PVC rigide.

Le PVC présent dans le PVC rigide employé selon l'invention peut être un unique type de PVC ayant typiquement un KW entre 50 et 75, ou bien un mélange de plusieurs PVC ayant chacun un KW entre 50 et 75.

Le « KW » (également désigné par « K-Wert », ou « valeur de K ») d'un PVC donné est une valeur déterminée à partir de l'indice de viscosité dudit PVC, cet indice de viscosité étant mesuré dans les conditions de norme ISO R 174 à 25°C et à une concentration de 0,5g de PVC dans 100mL de cyclohexanone.

A l'indice de viscosité mesuré dans ces conditions spécifiques correspond une valeur de K (« K-Wert »), donnée selon la norme DIN 53726, qui correspond à la valeur KW à laquelle il est fait référence ici.

### Le plastifiant

Le plastifiant qui est mélangé avec le PVC rigide selon l'invention est avantageusement un plastifiant non halogéné, par exemple être choisi parmi :
- les phatalates, par exemple un orthophtalate tel que le Di(2-propylheptyl)phthalate DPHP ou bien encore le phtalate de diisodécyle DIDP ou bien un téréphtalate tel que le phtalate de dioctyl DOTP ;
- les triméllitates et les sébacates ; et
- les mélanges de ces composés.

Quelle que soit la nature du plastifiant employé, celui-ci est avantageusement présent dans le PVC plastifié à hauteur de 30 à 60 parties en poids pour 100 parties en poids de PVC rigide.

### Le mélange obtenu à partir du PVC rigide et du plastifiant

Par mélange du PVC rigide et du plastifiant selon l'invention, un mélange est obtenu (PVC plastifié) qui peut éventuellement comprendre d'autres composés que le PVC rigide et le plastifiant. Bien que non nécessaires pour obtenir les avantages visés par l'invention, ces composés optionnels permettent au besoin de moduler les propriétés de la couche réalisée à partir du PVC plastifié de l'invention.

Le PVC plastifié peut par exemple être obtenu en mélangeant le PVC rigide et le plastifiant en présence d'au moins un polymère additionnel non présent dans le PVC rigide, par exemple :
- au moins un PVC additionnel autre que le PVC rigide, introduit sous la forme d'une composition polymère distincte du polymère rigide, comme par exemple un PVC additionnel préalablement plastifié et/ou un PVC surchloré (ayant un taux de chlore supérieur à 60%) (on peut alternativement ajouter un PVC vierge et des plastifiants séparés);
   et/ou
- au moins un polymère distinct d'un PVC, notamment au moins un composé choisi parmi les caoutchoucs à base de nitrile, les polyester, , les caoutchoucs chlorés de type CPE, et leurs mélanges.

Ce polymère additionnel peut, le cas échéant, être ajouté avant, pendant, et/ou après le mélange du PVC rigide et du plastifiant. Selon un mode possible, la composition de PVC de l'invention ne comprend pas de polymère additionnel du type précité.

Lorsque le PVC rigide est employé avec un PVC additionnel autre que le PVC rigide, l'invention autorise, dans l'absolu, que le PVC rigide prétraité thermiquement soit le PVC majoritaire dans le mélange. Ainsi selon un premier mode possible, le PVC rigide prétraité thermiquement peut représenter représente au moins 50% en masse, voire au moins 70 % en masse de la totalité du PVC employé dans l'étape de mélange (voire au moins 80% ou même 90%).

Selon un autre mode de réalisation possible, qui se révèle souvent plus adapté en pratique, notamment lorsque le PVC rigide prétraité thermiquement est un PVC issu d'un recyclage et/ou lorsque des propriétés spécifiques sont recherchées, il est alternativement possible que le PVC rigide prétraité thermiquement soit employé en mélange avec d'autres PVC et que la teneur en PVC rigide prétraité thermiquement soit inférieure à 50%, par exemple entre 5 et 30%, notamment à raison de 20% ou moins, par exemple entre 5 et 15%, notamment entre 5 et 10%.

Lorsque la composition de PVC plastifié de l'invention comprend un polymère qui n'est pas un PVC (ou plusieurs polymères qui ne pas des PVC), la quantité totale de ces polymères autres que du PVC est en général inférieure à 50 parties en poids et de préférence inférieure à 30 partie, voire à 10 parties en poids pour 100 parties en poids de polymère de type PVC dans la composition. En d'autres termes, une composition de PVC plastifié selon l'invention comprend de préférence plus de 50% en masse de polymères qui sont des PVC, avantageusement plus de 70% en masse, et encore plus avantageusement au moins 90% en masse par rapport à la masse totale des polymères présents dans la composition. Selon un mode de réalisation avantageux, une composition de PVC plastifié selon l'invention comprend plus de 95% de polymères qui sont des PVC et typiquement plus de 98% de polymères qui sont des PVC, par rapport à la masse totale des polymères présents dans la composition.

Selon le mode particulier où un PVC additionnel autre que le PVC rigide est mis en oeuvre dans le mélange conduisant à la composition de PVC plastifié de l'invention, ce PVC additionnel peut avantageusement être introduit sous la forme d'une composition additionnelle de PVC plastifiée, dite ci-après composition « CP » à des fins de concision, comprenant du PVC et un plastifiant, par exemple du type précité. Dans ce cas, la composition de PVC plastifié de l'invention est typiquement obtenue par mélange du PVC rigide, du plastifiant, et de la composition additionnelle CP. Toutefois, selon une variante particulière, du fait de la présence de plastifiant dans la composition CP, le mélange peut se limiter au mélange de la composition de PVC rigide et de la composition additionnelle CP. Dans le cadre de cette variante, la composition additionnelle CP est avantageusement une composition de PVC surplastifiée, comprenant plus de plastifiant qu'il n'est nécessaire pour assurer la plastification de la composition CP.

Optionellement, et quel que soit le mode de mise en oeuvre envisagée, le PVC plastifié préparé selon l'invention peut comprendre au moins un additif non présent dans la composition de PVC rigide, et qui est ajouté avant, pendant, et/ou après le mélange du PVC rigide et du plastifiant. Le cas échéant, cet additif peut par exemple être choisi parmi des charges, notamment des charges minérales comme le carbonate de calcium, et/ou des charges minérales hydratées telle que l'hydroxyde d'aluminium (ATH) ; l'hydroxyde de magnésium (MDH), l'hydromagnésie, la huntite et leurs mélanges ; des agents favorisant la mise en oeuvre tels que des lubrifiants ou des agents compatibilisants ; des antioxydants ; des agents anti-UV ; des stabilisants ; des pigments ; ou un de leurs mélanges. De tels additifs peuvent être introduits par exemple à titre de constituants de la composition additionnel CP précitée, ou bien être introduits séparément, qu'une composition CP additionnel soit employée ou non.

### Obtention du PVC plastifié selon l'invention

Le mélange du plastifiant et du PVC rigide (et optionnellement d'un polymère additionnel et/ou d'au moins un additif du type précité) peut s'opérer selon différent modes possibles.

Selon un premier mode de réalisation particulièrement intéressant du mélange, le PVC rigide, avantageusement réduit en poudre, est mélangé avec le plastifiant, avantageusement au sein d'un mélangeur de type turbo-mélangeur, pour assurer une adsorption du plastifiant sur le PVC, qui peut s'accompagner de phénomènes de migrations au sein du PVC s'apparentant à une absorption. Pour des raisons de concisions, il sera fait référence ici à un phénomène dit d'« imprégnation » et le PVC issu de l'étape de mélange avec le plastifiant PVC sera désigné par « PVC imprégné ». Notamment pour permettre une adsorption du plastifiant la plus efficace possible, le PVC est de préférence réduit en poudre de granulométrie inférieure à 1 mm, et plus préférentiellement inférieure à 800 microns (une taille la plus faible possible est préconisée, par exemple de l'ordre de quelques centaines de microns ou moins, typiquement inférieure à 500 microns, par exemple inférieures à 300 microns)Le PVC imprégné obtenu par mise en contact du PVC rigide et du plastifiant est ensuite malaxé à chaud, avantageusement par au moins un passage dans un mélangeur de type bi-vis ou co-malaxeur, afin d'assurer la plastification recherchée.

Ainsi, selon ce premier mode de réalisation, préféré selon l'invention, le mélange du plastifiant et du PVC rigide comprend typiquement:
- une étape d'imprégnation où le PVC rigide, avantageusement réduit en poudre ayant la granulmétrie préférentielle précité, est mis en contact avec le plastifiant , de préférence dans un turbo-mélangeur, et avantageusement avec une vitesse de rotation et pendant une durée suffisantes pour induire une augmentation de température du mélange par jusqu'à une température de décharge supérieure à 80 °C, typiquement entre 80°C et 130°C ; puis
- après cette étape d'imprégnation, au moins un malaxage à chaud, de préférence dans un dispositif de type bi-vis ou co-malaxeur, avec un profil de température de mise en oeuvre de 140-180 °C, avantageusement sous profil cisaillant.

Selon ce premier mode de réalisation du mélange, au moins un polymère additionnel et/ou au moins un additif peut éventuellement être ajouté, avant, pendant et/ou après l'introduction du PVC rigide et avant, pendant et/ou après l'introduction du plastifiant, par exemple dans le turbo-mélangeur, entre le turbo-mélangeur et le co-malaxeur ou la bi-vis, et/ou dans le co-malaxeur ou la bi-vis.

Selon un second mode de réalisation envisageable, la plastification peut être conduite dans des conditions similaires à celles du premier mode décrit ci-dessus , mais en introduisant tout ou partie du plastifiant lors de l'étape de malaxage. Plus précisément, selon ce second mode, le mélange du plastifiant et du PVC rigide comprend :
- la fourniture du PVC rigide, avantageusement réduit en poudre, en mélange avec une partie seulement du plastifiant ou sans introduction de plastifiant ( ; et
- au moins un malaxage à chaud du PVC rigide ainsi fourni, effectué en présence de la partie de plastifiant non employée dans l'étape précédente (à savoir le complément de plastifiant lorsque l'étape de fourniture met en oeuvre une première partie du plastifiant ou, la totalité du plastifiant lorsqu'aucun plastifiant n'est mis en oeuvre dans la première étape).

Selon ce deuxième mode de réalisation du mélange, au moins un polymère additionnel et/ou au moins un additif peut éventuellement être ajoutés, avant, pendant et/ou après l'introduction du PVC rigide et du plastifiant.

Selon un troisième mode de réalisation possible, le PVC rigide peut être mélangé à une composition polymère surplastifiée, notamment une composition de PVC additionnelle CP du type précité, cette composition comprenant une quantité de plastifiant plus importante que nécessaire pour plastifier ladite composition. Selon ce troisième mode, le plastifiant servant à plastifier le PVC rigide est contenu dans l'excès de plastifiant présent dans la composition polymère surplastifiée ajoutée au PVC rigide.

Selon ce troisième mode de réalisation, le mélange du plastifiant et du PVC rigide comprend au moins un malaxage à chaud d'un mélange du PVC rigide et de la composition polymère surplastifiée, de préférence dans un dispositif de type bi-vis ou co-malaxeur, avec de préférence un profil de température de mise en oeuvre de 140-180 °C, avantageusement sous profil cisaillant.

Selon ce troisième mode, le PVC et la composition surplastifiée sont généralement mélangés physiquement sous une forme de solides divisés en amont du dispositif de malaxage à chaud ou au sein de celui-ci :
- le PVC rigide peut avantageusement être mis en oeuvre sous forme de granulés ayant typiquement des dimensions supérieures à 1 mm, en général supérieures (sans nécessité de le réduire en poudre) ;
- la composition polymère surplastifiée peut être indifféremment mise en oeuvre sous forme de poudre (en employant alors un turbo-mélangeur du type employé selon les modes précédents) ou plus avantageusement sous la forme de granulés.

Quel que soit le mode de réalisation du mélange, le PVC plastifié peut ensuite être mis en oeuvre de façon connue en soi pour fabriquer une couche de PVC dans un câble selon l'invention.

Le PVC plastifié obtenu peut éventuellement être immédiatement employé en l'état sur son site de production pour réaliser une couche au sein d'un câble électrique à l'issu de la dernière étape de malaxage à chaud, mais, le plus souvent la composition de PVC obtenue selon l'invention peut être stockée intermédiairement ce qui permet une utilisation plus ou moins différée et/ou effectuée sur un autre site. A cet effet, le PVC plastifié est typiquement formulé sous forme de granulés, par exemple par refroidissement dans l'eau du mélange issu de la dernière étape de malaxage à chaud, puis passage dans une granulatrice.

### Couches et gaines obtenues à partie d'une composition selon l'invention

Un PVC plastifié selon l'invention peut être aisément appliqué, par extrusion par exemple, autour d'un élément conducteur allongé, ou bien autour d'un ensemble de conducteurs allongés ou bien encore pour former une gaine autour d'un ensemble comprenant au moins un élément conducteur allongé recouvert par une couche isolante.

Une couche ou une gaine obtenue par une telle application d'une composition de l'invention notamment par extrusion a typiquement une épaisseur allant de 0,1 à 5 mm environ, et de façon particulièrement préférée allant de 0,7 à 2,5 mm L'exemple ci-après illustre la présente invention.

### Exemple

Une composition de PVC plastifié selon l'invention a été préparée dans les conditions ci-après.

Une poudre de PVC rigide (rPVC) issue de tuyaux et de menuiseries en fin de vie a été mélangée à un plastifiant (DPHP) dans un turbo-mélangeur pendant une quinzaine de minutes, de façon à permettre une imprégnation de la poudre par le plastifiant.

La poudre imprégnée a ensuite été introduite dans une bis-vis co-rotative pour assurer la plastification, avec une température de mise en oeuvre de 170°C, puis granulation en sortie de bi-vis.

La composition plastifiée ainsi obtenue a été extrudée en bande à l'aide d'une monovis à 175 °C.

Les propriétés mesurées pour la bande ainsi réalisée, qui reflètent les performance de couches obtenue avec ce PVC plastifié obtenu au sein d'un câble électrique sont les suivantes :
**A. Propriétés mécaniques** (mesurées selon la norme IEC 60811-501)
   Elongation à la rupture : 259%
   Pic de résistance à la traction : 16,3 MPa
**B. Résistance à l'huile** (mesurée selon la norme IEC 60811-404 huile utilisée: IRM902 - 4h/70°C)
   ΔEB : -2%
   ΔTSP : -2%

C. vieillissement thermique (168h/100°C- selon la norme IEC 60811-401)
   ΔEB : -10%
   ΔTSP : -7%
D. élongation à froid (-25°C) - selon la norme IEC 60811-505
   EB : 80%
E. Stabilité thermique- selon la norme IEC 60811-405
   35 minutes
**F. perte de masse** - selon la norme **IEC 60811-409**
   -0,16 mg/cm³

## Revendications

1. Câble électrique comprenant au moins une couche à base de polychlorure de vinyle (PVC) entourant au moins un élément conducteur allongé, où ladite couche comprend un PVC plastifié obtenu par mélange d'un plastifiant avec un PVC rigide, où ledit PVC rigide a été soumis à un traitement thermique préalablement au mélange avec le plastifiant.

2. Câble selon la revendication 1, où le PVC rigide est un PVC ayant subi au moins une étape de traitement thermomécanique avant le mélange avec le plastifiant, par exemple une étape de mise en forme à chaud de type extrusion.

3. Câble selon la revendication 1 ou 2, où le PVC rigide est issu d'un recyclage

4. Câble selon l'une des revendications 1 à 3, où le plastifiant est choisi parmi les phatalates ; les triméllitates et les sébacates ; et les mélanges de ces composés.

5. Câble selon l'une des revendications 1 à 4, où la teneur en plastifiant est comprise entre 30 à 60 parties en poids pour 100 parties en poids de PVC rigide.

6. Procédé de préparation d'un câble électrique selon l'une des revendication 1 à 5, ledit procédé comprenant au moins une étape où on applique autour dudit conducteur allongé une composition obtenue par mélange d'un PVC rigide et d'un plastifiant, où ledit PVC rigide a été soumis à un traitement thermique préalablement au mélange avec le plastifiant.

7. Procédé selon la revendication 6, **caractérisé en ce que** le mélange du plastifiant et du PVC rigide comprend :
- une étape d'imprégnation où le PVC rigide, avantageusement réduit en poudre, est mis en contact avec le plastifiant, de préférence dans un turbo-mélangeur ; puis
- après cette étape d'imprégnation, au moins un malaxage à chaud, de préférence dans un dispositif de type bi-vis ou co-malaxeur.

8. Procédé selon la revendication 6, **caractérisé en ce que** le mélange du plastifiant et du PVC rigide comprend :
- la fourniture du PVC rigide, avantageusement réduit en poudre, en mélange avec une partie seulement du plastifiant ou sans introduction de plastifiant ; et
- au moins un malaxage à chaud du PVC rigide ainsi fourni, effectué en présence de la partie de plastifiant non employée dans l'étape précédente, à savoir le complément de plastifiant lorsque l'étape de fourniture met en oeuvre une première partie du plastifiant ou, la totalité du plastifiant lorsqu'aucun plastifiant n'est mis en oeuvre dans la première étape.

9. Procédé selon la revendication 6, **caractérisé en ce que** le mélange du plastifiant et du PVC rigide comprend au moins un malaxage à chaud d'un mélange du PVC rigide et d'une composition polymère surplastifiée, de préférence dans un dispositif de type bi-vis ou co-malaxeur,
le PVC et la composition surplastifiée étant de préférence mélangés physiquement sous une forme de solides divisés en amont du dispositif de malaxage à chaud ou au sein de celui-ci.
